# EUROPÄISCHE PATENTANMELDUNG

(11) **EP 1 148 565 A2**
(43) Veröffentlichungstag der Anmeldung: **24.10.2001**
(21) Anmeldenummer: 01108594.1
(22) Anmeldetag: 05.04.2001
(51) Int. Cl.: H01M 8/02, H01M 8/06, B60K 1/04

(54) **Brennstoffzellensystem**

(30) Priorität: 22.04.2000 DE 10020087
(71) Anmelder: XCELLSIS GmbH, 73230 Kirchheim/Teck-Nabern (DE)
(72) Erfinder: Dobler, Klaus, 72622 Nürtingen (DE); Griesmeier, Uwe, 88677 Markdorf (DE); Haug, Alfred, 73230 Kirchheim (DE); Mirsch, Dietmar, 73230 Kirchheim-Nabern (DE); Schmid, Wolfgang, 71067 Sindelfingen (DE)
(74) Vertreter: Kocher, Klaus-Peter Dipl.-Phys

(57) **Zusammenfassung**

Die Erfindung betrifft ein Brennstoffzellensystem mit einer ein- oder mehrstufigen Gaserzeugungseinheit zur Herstellung eines wasserstoffreichen Gases aus einem Rohkraftstoff, mit einer ein- oder mehrstufigen Gasreinigungseinheit, mit zumindest einer Brennstoffzelle und mit einer ein- oder mehrstufigen Abgasnachbehandlungseinheit zur möglichst vollständigen Umsetzung der Brennstoffzellenabgase. Erfindungsgemäß werden zumindest zwei Teileinheiten des Brennstoffzellensystems über eine Verbindungsplatte mechanisch und strömungstechnisch miteinander verbunden sind.

## Beschreibung

Die vorliegende Erfindung betrifft ein Brennstoffzellensystem nach dem Oberbegriff des Patentanspruchs 1.

Herkömmliche Brennstoffzellen verwenden als Brennstoff Wasserstoff, welcher in der Brennstoffzelle vorgeschalteten Stufen aus einem flüssigen Brennstoff, beispielsweise aus Methanol hergestellt wird. Da bei der Herstellung des Wasserstoffs üblicherweise auch für die Brennstoffzelle schädliches Kohlenmonoxid entsteht, wird zusätzlich noch eine Gasreinigungseinheit zwischengeschaltet, so daß eine Beaufschlagung der Anodenseite der Brennstoffzelle mit im wesentlichen reinem Wasserstoff erfolgt. Wird ein flüssiger Brennstoff als Ausgangsstoff verwendet ist häufig auch eine Verdampfereinheit vorgesehen. Schließlich ist zur Vermeidung von Umweltbelastungen eine Abgasnachbehandlungseinheit vorgesehen, in der alle brennbaren Bestandteile der Brennstoffzellenabgase möglichst vollständig umgesetzt werden. Zum Aufbau eines funktionsfähigen Gesamtsystems müssen alle diese Komponenten sowohl strömungstechnisch als auch mechanisch miteinander verbunden werden.

Aufgabe der Erfindung ist die Bereitstellung eines Brennstoffzellensystems, welches möglichst kompakt aufgebaut ist und zur maschinellen Montage geeignet ist.

Diese Aufgabe wird gelöst durch ein Brennstoffzellensystem mit den Merkmalen des Patentanspruchs 1.

Ein großer Vorteil dieser Anordnung ist es, daß die Anordnung im Vergleich zu herkömmlichen, teilweise sehr aufwendigen Verrohrungen sehr kompakt und übersichtlich wird. Die Gefahr, daß Verbindungsleitungen falsch angeschlossen werden, besteht nicht mehr. Ein weiterer wesentlicher Vorteil besteht darin, daß dieser Aufbau für eine Maschinenmontage geeignet und daher vorteilhaft für eine automatische Produktion in größeren Stückzahlen einsetzbar ist.

Weiterhin können einzelne Teileinheiten, beispielsweise bei einem Defekt, auf einfache Art und Weise ausgetauscht werden. Schließlich ist es vorteilhaft, daß die Steuer- und Regelungstechnik, sowie Meß- und Dosierstellen integriert werden können.

In Brennstoffzellensystemen stellt sich weiterhin die Problematik, daß einzelne Teileinheiten auf stark unterschiedlichen Temperaturniveaus arbeiten. In diesem Fall kann durch geeignete Materialauswahl für die Verbindungsplatte 10 eine thermische Isolierung der Teileinheiten einfach realisiert werden. Wird im ersten Ausführungsbeispiel die Verbindungsplatte sehr steif ausgeführt, so können außerdem Schwingungsprobleme reduziert werden.

Weitere Vorteile gehen aus den Unteransprüchen und der Beschreibung hervor. Die Erfindung wird nun anhand der beigefügten Zeichnung näher beschrieben. In dieser zeigt
- Fig. 1: ein vereinfachtes Blockschaltbild eines Brennstoffzel- lensystems,
- Fig. 2: eine Prinzipdarstellung einer ersten Ausführungsform des erfindungsgemäßen Brennstoffzellensystems,
- Fig. 3: ein Teilschnitt durch eine erfindungsgemäße Verbin- dungsplatte, und
- Fig. 4: eine Prinzipdarstellung einer zweiten Ausführungsform des erfindungsgemäßen Brennstoffzellensystems.

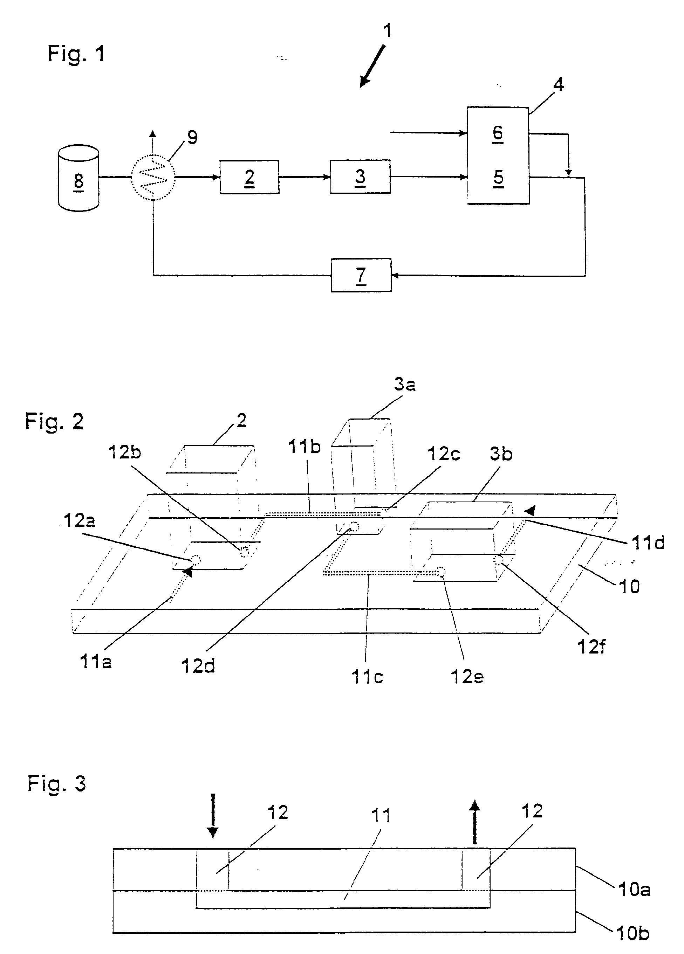

Das insgesamt mit 1 bezeichnete Brennstoffzellensystem gemäß Fig. 1 weist eine Gaserzeugungseinheit 2, eine Gasreinigungseinheit 3, eine Brennstoffzelle 4 mit einem Anodenraum 5 und einem Kathodenraum 6 und eine Abgasnachbehandlungseinheit 7 auf. In der Gaserzeugungseinheit wird aus einem Brennstoff mittels partieller Oxidation und/oder Wasserdampfreformierung ein wasserstoffreiches Gas erzeugt. In diesem wasserstoffreichen Gas ist üblicherweise auch Kohlenmonoxid enthalten, welches für die im Anodenraum 5 der Brennstoffzelle 4 vorhandenen Katalysatoren schädlich wirkt. Aus diesem Grund ist zwischen der Gaserzeugungseinheit 2 und dem Anodenraum 5 der Brennstoffzelle 4 eine Gasreinigungseinheit 3 vorgesehen. Hierbei handelt es sich vorzugsweise um eine Vorrichtung zur selektiven katalytischen Oxidation des Kohlenmonoxids unter Zugabe von Sauerstoff. Es können jedoch auch andere geeignete Gasreinigungseinheiten 3, beispielsweise eine Membranreinigungseinheit, verwendet werden.

Nach dem Durchströmen der Brennstoffzelle 4 wird das Anodenabgas mit der Abluft aus dem Kathodenraum 6 gemischt und der Abgasnachbehandlungseinheit 7 zugeführt. Dort werden an einem geeigneten Katalysator, vorzugsweise einem Edelmetallkatalysator, alle brennbaren Bestandteile der Brennstoffzellenabgase möglichst vollständig umgesetzt. Anstelle des Kathodenabgases kann auch ein anderes sauerstoffhaltiges Gas stromauf der Abgasnachbehandlungseinheit 7 dem Anodenabgas beigemischt werden.

Der Brennstoff wird aus einem Brennstofftank 8 in die Gaserzeugungseinheit 2 geführt. In dem Brennstofftank 8 werden vorzugsweise flüssige Brennstoffe mitgeführt. Alternativ können aber auch gasförmige Brennstoffe verwendet werden, wobei dann der Brennstofftank 8 als Druck- oder Flüssiggasspeicher ausgebildet ist. Bei der Verwendung eines flüssigen Brennstoffes wird üblicherweise zusätzlich eine Verdampfereinheit 9 vorgesehen, die den flüssigen Brennstoff vor dem Eintritt in die Gaserzeugungseinheit 2 in die gasförmige Phase überführt. In dem gezeigten Ausführungsbeispiel wird die Verdampfereinheit 9 durch die heißen Abgase der Abgasnachbehandlungseinheit 7 beheizt. Alternativ ist es jedoch auch möglich, den Verdampfer durch ein anderes Wärmeträgermedium zu beheizen. Möglich ist es auch, die Abgasnachbehandlungseinheit 7 ganz oder teilweise in die Verdampfereinheit 9 zu integrieren.

Solche Brennstoffzellensysteme sind aus dem Stand der Technik vielfältig bekannt und wurden daher vorstehend nur prinzipiell erläutert. Der Schutzbereich soll durch die Art und den Aufbau eines solchen Brennstoffzellensystems nicht eingeschränkt werden.

In einem ersten Ausführungsbeispiel gemäß den Fig. 2 und 3 werden verschiedene Teileinheiten des Brennstoffzellensystems entsprechend einer Platine in der Halbleitertechnik durch eine Verbindungsplatte 10 strömungstechnisch und mechanisch miteinander verbunden. In diesem Ausführungsbeispiel sind exemplarisch drei Teileinheiten auf der Verbindungsplatte 10 integriert. Hierbei kann es sich beispielsweise um eine Gaserzeugungseinheit 2 und um eine zweistufige Gasreinigungseinheit 3, 3' handeln. Die mechanische Verbindung der Teileinheiten mit der Verbindungsplatte 10 ist in der Zeichnung zur Vereinfachung nicht dargestellt. Vorzugsweise werden die Teileinheiten jedoch mit der Verbindungsplatte 10 verschraubt, vorzugsweise unter Zwischenschaltung von ebenfalls nicht dargestellten Dichtungen. In diesem Falle ist es leicht möglich, einzelne Teileinheiten, beispielsweise im Falle eines Defektes, einfach und schnell auszutauschen. Selbstverständlich ist es auch möglich, die Teileinheiten auf andere Art und Weise mit der Verbindungsplatte 10 zu verbinden, beispielsweise durch Kleben, Schweißen, Löten, Nieten usw.

Die einzelnen Teileinheiten weisen zumindest eine Zu- und Abführung für das wasserstoffreiche Gas auf. Es können aber auch andere oder weitere Medienzu- und -abführung, beispielsweise für ein sauerstoffhaltiges Gas oder ein Wärmeträgermedium vorgesehen werden. In der Zeichnung sind diese weiteren Medienzu- und -abführungen jedoch zur Vereinfachung nicht dargestellt. In der Verbindungsplatte 10 sind Strömungskanäle 11 vorgesehen, die sich vorzugsweise in Richtung der Hauptebene der Verbindungsplatte 10 erstrecken. Über Bohrungen 12 kommunizieren diese Strömungskanäle 11 im wesentlichen senkrecht zu der Hauptebene der Verbindungsplatte 10 mit den jeweils korrespondierenden Medienzu- und -abführungen der Teileinheiten.

Gemäß dem gezeigten Ausführungsbeispiel wird also ein vorzugsweise gasförmiger Brennstoff und gegebenenfalls Wasserdampf und/oder Sauerstoff über den Strömungskanal 11a zugeführt. Der Anschluß des Strömungskanals 11a an den Brennstofftank 8 beziehungsweise die Verdampfereinheit 9 ist nicht dargestellt. Der Brennstoff wird dann durch die Bohrung 12a in die Gaserzeugungseinheit 2 geführt. Die korrespondierende Medienzuführung der Gaserzeugungseinheit ist wiederum nicht explizit dargestellt. Nach dem Durchströmen der Gaserzeugungseinheit 2 wird das wasserstoffreiche Gas dann über eine wiederum nicht explizit dargestellte Medienabführung und die Bohrung 12b in den Strömungskanal 11b geleitet. Die Medienführung innerhalb der Gaserzeugungseinheit 2, beziehungsweise aller Teileinheiten, ist für die Erfindung nicht erheblich und ist daher auch an keiner Stelle dargestellt. Entscheidend ist lediglich, daß die Medienzu- und Abführungen der Teileinheiten mit den zugehörigen Bohrungen 12 korrespondieren.

Mit Hilfe des Strömungskanals 11b wird das wasserstoffreiche Gas dann über die Bohrung 12c der Gasreinigungseinheit 3a zugeführt und nach dem Durchströmen dieser Gasreinigungseinheit 3a über die Bohrung 12d in den Strömungskanal 11c wieder abgegeben. Der Strömungskanal 11c führt das teilweise gereinigte Gas mit Hilfe der Bohrung 12e in die zweite Stufe 3b der Gasreinigungseinheit. Nach dem Durchströmen dieser zweiten Stufe 3b wird das vollständig gereinigte Gas dann über die Bohrung 12f in den Strömungskanal 11d geleitet und vorzugsweise zur nicht dargestellten Brennstoffzelle 4 geführt.

In dem gezeigten Ausführungsbeispiel sind alle Teileinheiten auf einer Oberfläche der Verbindungsplatte 10 angeordnet. Selbstverständlich ist es ebenfalls möglich, ein Teil oder alle Teileinheiten auch auf der gegenüberliegenden Oberfläche der Verbindungsplatte 10 anzuordnen.

In einem bevorzugten Beispiel für den Aufbau einer erfindungsgemäßen Verbindungsplatte gemäß Fig. 3 besteht die Verbindungsplatte 10 aus zwei Teilplatten 10a und 10b. Zur Ausbildung der Strömungskanäle 11 ist auf der der anderen Teilplatte 10a zugewandten Oberfläche der Teilplatte 10b eine Vertiefung 11 eingebracht. Durch Zusammenfügen der beiden Teilplatten bildet dann die Vertiefung 11 in der Teilplatte 10b zusammen mit der anderen Teilplatte 10a den Strömungskanal 11 aus. Für den Anschluß der Teilkomponenten sind außerdem in der Teilplatte 10a Bohrungen 12 vorgesehen. In diesem Zusammenhang wird Bohrung im Sinne einer beliebigen Durchbrechung der Teilplatte 10a, unabhängig vom Querschnitt oder der Art der Einbringung, verwendet. Neben dem gezeigten Ausführungsbeispiel ist es auch möglich, entsprechende Vertiefungen 11 anstelle oder zusätzlich zu den Vertiefungen in der Teilplatte 10b äuch in der der Teilplatte 10b zugewandten Oberfläche der Teilplatte 10a vorzusehen. Werden auch Teileinheiten auf der Teilplatte 10b angeordnet, so müssen entsprechende Bohrungen 12 auch in der Teilplatte 10b vorgesehen werden. Anstelle von zwei Teilplatten 10a, 10b können auch eine größer Anzahl von Teilplatten verwendet werden, wodurch eine komplexere Führung der Strömungskanäle, beispielsweise auch die Kreuzung von Strömungskanälen auf einfache Art und Weise realisiert werden kann.

Weiterhin ist es auch möglich, die Verbindungsplatten 10 auf andere Art und Weise, beispielsweise durch Spritzgießen, durch Tiefziehen von Blechen oder auf andere geeignete Weise herzustellen. Denkbar ist auch, Strömungskanäle durch mehrere Bohrungen in eine einstückige Verbindungsplatte einzubringen, wobei nicht benötigte Bohrungsteile anschließend wieder verschlossen werden.

Die Anordnung einer Gaserzeugungseinheit 2 und einer zweistufigen Gasreinigungseinheit 3a, 3b auf einer Verbindungsplatte 10 stellt lediglich eine exemplarische Ausführungsform dar. Selbstverständlich kann die erfindungsgemäße Lehre für das strömungstechnisch und mechanische Verbinden von Teileinheiten eines Brennstoffzellensystems auch auf andere Kombinationen von Teileinheiten angewendet werden. Weiterhin können als Teileinheiten auch sogenannte Kombireaktoren verwendet werden. In solchen Kombireaktoren sind bereits zwei oder mehrere Reaktoren thermisch und gegebenenfalls auch strömungstechnisch integriert. Beispielsweise sind Kombireaktoren für die Integration einer Gaserzeugungseinheit 2 und einer Gasreinigungseinheit 3 oder für die Integration einer Abgasnachbehandlungseinheit 7 in eine Verdampfereinheit 9 bekannt. Bei solchen Kombireaktoren kann es ebenfalls erforderlich sein, eine größere Anzahl von Medienzu- und -abführungen vorzusehen.

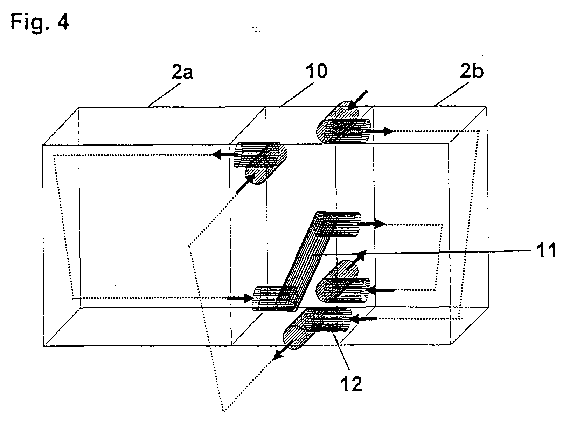

In einem zweiten Ausführungsbeispiel gemäß Fig. 4 ist die Verbindungsplatte 10 genau zwischen den Stirnflächen zweier Teileinheiten, beispielsweise zweier Stufen 2a, 2b einer Gaserzeugungseinheit angeordnet. Hierbei sind wiederum alle Medienzuund -abführungen der Teileinheiten in deren Stirnflächen angeordnet. Nach dem mechanischen Verbinden der Teileinheiten 2a, 2b jeweils mit der Verbindungsplatte 10 ergibt sich ein insgesamt mechanisch stabiler Körper. Durch diese Art der Verbindung können natürlich nicht nur zwei Teileinheiten, sondern auch eine Mehrzahl von Teileinheiten seriell miteinander verbunden werden, wobei dann jeweils zwischen zwei Teileinheiten eine Verbindungsplatte 10 vorgesehen wird. Weiterhin ist es möglich, mehrfach zwei oder mehrere Teileinheiten auf diese Art und Weise zu verbinden und dann diese Verbundeinheiten entweder herkömmlich über eine externe Verrohrung oder mittels der in Fig. 2 und 3 dargestellten Art und Weise zu verbinden.

Für den Fall, daß die Medienzu- beziehungsweise -abführungen der beiden gegenüberliegenden Teileinheiten 2a, 2b sich jeweils gegenüberliegen ist die Anordnung einer Bohrung 12 ausreichend. Liegen die zugehörigen Medienzu- beziehungsweise -abführungen nicht gegenüber, so wird eine entsprechende Umleitung der Medien durch eine Kombination von Bohrungen 12 und Strömungskanälen 11 realisiert. Auch in diesem Fall ist es möglich, die Verbindungsplatte 10 aus zwei oder mehreren Teilplatten herzustellen, so daß auch hier komplexe Strömungsverteilungen auf einfache Art und Weise realisiert werden können. Weist die Verbindungsplatte 10 eine in senkrechter Richtung zu deren Hauptebene ausreichende Dicke auf, so ist es außerdem möglich, eine oder mehrere weitere Teileinheiten oder auch eine Medienzu- beziehungsweise -abführung an den Seitenflächen der Verbindungsplatte 10 anzuordnen, so daß insgesamt eine Art sternförmige Anordnung entsteht.

Ein großer Vorteil dieser Anordnung ist es, daß in die Verbindungsplatte 10 auf einfache Art und Weise Meß- beziehungsweise Dosierstellen integriert werden können. Weiterhin wird die Anordnung im Vergleich zu herkömmlichen, teilweise sehr aufwendigen Verrohrungen sehr kompakt und übersichtlich. Die Gefahr, daß Verbindungsleitungen falsch angeschlossen werden, besteht ebenfalls nicht mehr. Ein weiterer wesentlicher Vorteil besteht darin, daß dieser Aufbau für eine Maschinenmontage geeignet und daher vorteilhaft für eine automatische Produktion in größeren Stückzahlen einsetzbar ist.

Weiterhin können einzelne Teileinheiten, beispielsweise bei einem Defekt, auf einfache Art und Weise ausgetauscht werden. Schließlich ist es vorteilhaft, daß die Steuer- und Regelungstechnik, sowie Meß- und Dosierstellen integriert werden können.

In Brennstoffzellensystemen stellt sich weiterhin die Problematik, daß einzelne Teileinheiten auf stark unterschiedlichen Temperaturniveaus arbeiten. In diesem Fall kann durch geeignete Materialauswahl für die Verbindungsplatte 10 eine thermische Isolierung der Teileinheiten einfach realisiert werden. Wird im ersten Ausführungsbeispiel die Verbindungsplatte sehr steif ausgeführt, so können außerdem Schwingungsprobleme reduziert werden. Bei sehr steifen Verbindungsplatten ist es auch möglich, die Teileinheiten zur Ausbildung einer Verbundeinheit selbsttragend mit der Verbindungsplatte 10 zu verbinden, so daß die Verbundeinheit durch eine an der Verbindungsplatte 10 angebrachte Vorrichtung auf einfache Art und Weise beispielsweise an einem Rahmenteil eines Fahrzeugs befestigt werden kann.

Falls die Medienführung es erfordert, daß Teileinheiten - vorzugsweise Kombireaktoren - nicht nur einfach durchströmt werden, sondern daß der Medienstrom nach dem Durchströmen der Teileinheit umgelenkt und anschließend erneut in die Teileinheit geführt werden soll, so kann eine Verbindungsplatte auch als Endplatte einer einzigen Teileinheit montiert werden.

## Patentansprüche

1. Brennstoffzellensystem (1) mit einer ein- oder mehrstufigen Gaserzeugungseinheit (2) zur Herstellung eines wasserstoffreichen Gases aus einem Rohkraftstoff, mit einer ein- oder mehrstufigen Gasreinigungseinheit (3)zur Entfernung von Kohlenmonoxid aus dem wasserstoffreichen Gas, mit zumindest einer Brennstoffzelle (4) und mit einer ein- oder mehrstufigen Abgasnachbehandlungseinheit (7) zur möglichst vollständigen Umsetzung der Brennstoffzellenabgase,
**dadurch gekennzeichnet,**
**daß** zumindest zwei Teileinheiten (2, 3, 4, 7, 9) des Brennstoffzellensystems (1) über eine Verbindungsplatte (10) mechanisch und strömungstechnisch miteinander verbunden sind.

2. Brennstoffzellensystem nach Anspruch 1,
**dadurch gekennzeichnet,**
**daß** in der Verbindungsplatte (10) zumindest ein Strömungskanal (11) vorgesehen ist, der im wesentlichen in Richtung der Hauptebene der Verbindungsplatte (10) verläuft und daß die Teileinheiten (2, 3, 4, 7, 9) auf einer oder auf gegenüberliegenden, parallel zur Hauptebene der Verbindungsplatte (10) verlaufenden Seiten der Verbindungsplatte (10) angeordnet sind und über im wesentlichen senkrecht zu der Hauptebene der Verbindungsplatte (10) angeordnete Bohrungen (12) in Strömungsverbindung mit dem zumindest einen Strömungskanal (11) stehen.

3. Brennstoffzellensystem nach Anspruch 2,
**dadurch gekennzeichnet,**
**daß** die Verbindungsplatte (10) aus mindestens zwei Teilplatten (10a, 10b) ausgebildet ist, daß in einer oder beiden einander zugewandten Oberflächen benachbarter Teilplatten (10a, 10b) Vertiefungen zur Ausbildung der Strömungskanäle (11) vorgesehen sind und daß in einer oder mehreren Teilplatten (10a, 10b) im wesentlichen senkrecht zur jeweiligen Teilplattenhauptebene verlaufende Bohrungen (12) zum Anschluß der Teileinheiten (2, 3, 4, 7, 9) an die Strömungskanäle (11) beziehungsweise zum strömungstechnischen Verbinden zweier Strömungskanäle (11) vorgesehen sind.

4. Brennstoffzellensystem nach Anspruch 3,
**dadurch gekennzeichnet,**
**daß** die Teilplatten (10a, 10b) als tiefgezogene Bleche ausgebildet sind.

5. Brennstoffzellensystem nach Anspruch 1,
**dadurch gekennzeichnet,**
**daß** die Verbindungsplatte (10) zwischen den zumindest zwei Teileinheiten (2, 3, 4, 7, 9) angeordnet ist, daß in der Verbindungsplatte (10) ein oder mehrere im wesentlichen parallel zur Hauptachse der Verbindungsplatte (10) angeordnete Strömungskanäle (11) und/oder im wesentlichen senkrecht zur Hauptachse der Verbindungsplatte (10) angeordnete Bohrungen(12) zur strömungstechnischen Verbindung der zumindest zwei Teileinheiten (2, 3, 4, 7, 9) vorgesehen sind, und daß die zumindest zwei Teileinheiten (2, 3, 4, 7, 9) jeweils mechanisch mit der Verbindungsplatte (10) verbunden sind.

6. Brennstoffzellensystem nach Anspruch 5,
**dadurch gekennzeichnet,**
**daß** mindestens eine weitere Teileinheit (2, 3, 4, 7, 9) senkrecht zu der durch die beiden Teileinheiten gebildeten Achse strömungstechnisch und mechanisch mit der Verbindungsplatte (10) verbunden ist.

7. Brennstoffzellensystem nach Anspruch 1,
**dadurch gekennzeichnet,**
**daß** die Verbindungsplatte (10) steif ausgebildet ist, daß die zumindest zwei Teileinheiten (2, 3, 4, 7, 9) zur Ausbildung einer Verbundkonstruktion selbsttragend mit der Verbindungsplatte (10) verbindbar sind und daß die Verbindungsplatte (10) eine Vorrichtung zum Befestigen der Verbundkonstruktion an ein Rahmenteil eines Fahrzeugs aufweist.
